# EUROPÄISCHE PATENTSCHRIFT

(11) **EP 1 010 961 B1**
(45) Veröffentlichungstag und Bekanntmachung des Hinweises auf die Patenterteilung: **28.01.2004**
(21) Anmeldenummer: 99890386.8
(22) Anmeldetag: 14.12.1999
(51) Int. Cl.: F28D 20/00

(54) **Wärmespeicher**
Heat storage
Stockage de chaleur

(30) Priorität: 16.12.1998 AT 209898
(43) Veröffentlichungstag der Anmeldung: 21.06.2000
(73) Patentinhaber: Kalkgruber, Johann, 4441 Behamberg (AT); Hinterplattner, Johann, 4523 Sierning (AT); Grossauer, Johann, 4463 Grossraming 43 (AT)
(72) Erfinder: Kalkgruber, Johann, 4441 Behamberg (AT)
(74) Vertreter: Hübscher, Gerhard, Dipl.-Ing.

(56) Entgegenhaltungen:
- EP-A- 0 675 327
- EP-A- 0 683 362
- WO-A-80/01714
- DE-A- 4 301 723
- DE-A- 19 703 724

## Beschreibung

Die Erfindung bezieht sich auf einen Wärmespeicher mit einem Speicherbehälter zur temperaturgeschichteten Aufnahme einer Speicherflüssigkeit und einem sich der Höhe nach durch den Speicherbehälter erstreckenden, in einen Ladekreislauf eingebundenen Ladeeinsatz, der einen Ladewärmetauscher und ein voneinander höhenbeabstandete Ausströmöffnungen bildendes Schichtrohr aus schlecht wärmeleitendem Material umfaßt.

Bei diesen Wärmespeichern, den sogenannten Schichtspeichern, werden die temperaturabhängigen Dichteunterschiede der Speicherflüssigkeit, vorzugsweise Wasser, benutzt, um eine definierte Temperaturschichtung innerhalb des Speicherbehälters zu erreichen und damit die Wärmeenergie der Speicherflüssigkeit auf einem möglichst hohen Temperaturniveau speichern zu können (DE 43 01 723 C2, EP 675 327 A2). Diese Temperaturschichtung innerhalb des Speicherbehälters soll beim Laden nicht beeinträchtigt werden, so daß spezielle, in einem Ladekreislauf eingebundene Ladeeinsätze Verwendung finden, die bisher aus einem von unten in den Speicherbehälter hochragenden Schichtrohr aus schlecht wärmeleitendem Material und einem im unteren Bereich des Schichtrohres untergebrachten Wärmetauscher bestehen, wobei das Schichtrohr der Höhe nach mit gegenseitigem Abstand angeordnete Ausströmöffnungen aufweist und der Wärmetauscher als Rohrschlangenwärmetauscher an den Vor- und Rücklauf des Ladekreislaufes angeschlossen ist. Dadurch wird die sich im Schichtrohr befindende Speicherflüssigkeit entsprechend dem Wärmeangebot des Ladekreislaufes über den Wärmetauscher erwärmt und steigt im Schichtrohr bis zu dem der Ladetemperatur entsprechenden Temperaturniveau des Speicherbehälters hoch, wo es durch die Ausströmöffnungen in die zugehörende Flüssigkeitsschicht ausströmt. Je nach Ladetemperatur werden daher die entsprechenden Temperaturschichtungen im Speicher aufgeladen, wodurch Rückkühlungen bereits höher erwärmter Flüssigkeitsschichten durch Flüssigkeitsströme geringerer Ladetemperatur und auch Mischströmungen innerhalb des Behälters auf Grund eines übermäßigen Aufladens geringer temperierter Flüssigkeitsschichten vermieden werden. Bei den bekannten Schichtspeichern mit ihrem im unteren Bereich innerhalb des Schichtrohres angeordneten Ladewärmetauscher erfolgen die Aufladungen von unten nach oben, wodurch der Wirkungsgrad begrenzt bleibt, und außerdem ist auf Grund der Notwendigkeit, innerhalb verhältnismäßig geringer Bauhöhe für einen ausreichenden Wärmeaustausch zwischen Wärmeträger des Ladekreislaufes und der Speicherflüssigkeit zu sorgen, ein recht aufwendiger Wärmetauscher erforderlich.

Der Erfindung liegt die Aufgabe zugrunde, einen Wärmespeicher der eingangs geschilderten Art zu schaffen, der bei vergleichsweise geringem Bauaufwand eine Steigerung des Wirkungsgrades erlaubt.

Die Erfindung löst diese Aufgabe dadurch, daß der Ladewärmetauscher aus einem vertikalen Wärmetauscherrohr besteht, daß das Schichtrohr im Deckenbereich des Speicherbehälters einen Einlaßstutzen für den Vorlaufanschluß des Ladekreislaufes aufweist und abwärts in das Wärmetauscherrohr hineinragt, wobei der im Deckenbereich abgeschlossene Ladewärmetauscher im Bodenbereich des Speicherbehälters mit einem Auslaßstutzen für den Rücklaufanschluß des Ladekreislaufes versehen ist. Das Schichtrohr dient demnach als Ladelanze für den Wärmetauscher und der Wärmeträger des Ladekreislaufes tritt entsprechend seiner Ladetemperatur durch die den Temperaturschichtungen im Speicherbehälter zugehörenden Ausströmöffnungen im Höhenbereich dieser Temperaturschichtungen aus dem Schichtrohr aus und wärmebeaufschlagt hier auch den Wärmetauscher, so daß sich je nach Wärmeangebot ein Durchladen des Speicherbehälters von oben nach unten ergibt. Außerdem kommt es zu einer vergleichsweise einfachen Konstruktion, da sich sowohl Schichtrohr als auch Wärmetauscher als Vertikalrohre ausbilden lassen, wobei lediglich darauf zu achten ist, daß einerseits der Durchmesser des Schichtrohres groß genug ist, um Strömungsturbulenzen zu vermeiden und sich die gewünschte Temperaturschichtung einstellen kann, und daß anderseits das Wärmetauscherrohr im Verhältnis zur Behältergröße und dem erforderlichen Energieeintrag eine ausreichende Wärmetauscherfläche bietet und sich im Zwischenraum zwischen Schichtrohr und Wärmetauscherrohr eine turbulenzfreie Durchlaufströmung entsprechend den sich temperaturbedingt ändernden spezifischen Gewichten einstellt. Durch die sich ergebende langsame Strömung innerhalb des Wärmetauschers bleibt genügend Zeit zur geschichteten Wärmeabgabe, die zu einem vollständigen Durchladen des Speichers führt. Da das Schichtrohr in den Wärmetauscher ausmündet und der Wärmetauscher im Bodenbereich an den Rücklauf des Ladekreislaufes anschließt, wird ein direkter Kontakt zwischen Wärmeträger und Speicherflüssigkeit vermieden und wegen des geschichteten Aufladevorganges bleiben die vorhandenen Temperaturschichtungen im Speicherbehälter weitgehend unbeeinträchtigt.

Um die Effizienz der Beladung des Speicherbehälters in den höheren Temperaturbereichen zu verstärken, kann der Ladewärmetauscher im oberen Speicherbehälterbereich mit einer Zusatzwärmetauscherfläche ausgestattet sein, wobei vorzugsweise eine Rohrschlange die Zusatzwärmetauscherfläche bildet. Auf Grund der Vergrößerung der Wärmetauscherfläche kommt es zu einer gesteigerten Energieübertragung im Zusatzwärmetauscherbereich und damit zu einer Schnelladung der oberen Temperaturschichtungen. Besteht der Zusatzwärmetauscher aus einer Rohrschlage, die beiderends an das Wärmetauscherrohr anschließt, wird die Rohrschlange vom Wärmeträger des Ladekreislaufes wegen der temperaturabhängigen Dichteunterschiede selbstumlaufend durchströmt und für einen intensiveren Wärmeaustausch gesorgt.

Ist der Ladewärmetauscher im unteren Speicherbehälterbereich mit einer Zusatzwärmetauscherfläche ausgestattet, läßt sich auch in den tieferen Temperaturschichtungen des Speichers eine optimale Energieeinbringung gewährleisten, was vor allem bei einem bereits zum Großteil aufgeladenen Speicherbehälter von Bedeutung ist, da dann nur mehr im unteren Speicherbereich die Wärmetauscherflächen wirksam sind. Als Zusatzwärmetauscherfläche kann eine entsprechende Formgebung des Wärmetauscherrohres dienen oder aber auch ein eigener Wärmetauscher, beispielsweise eine weitere Rohrschlange.

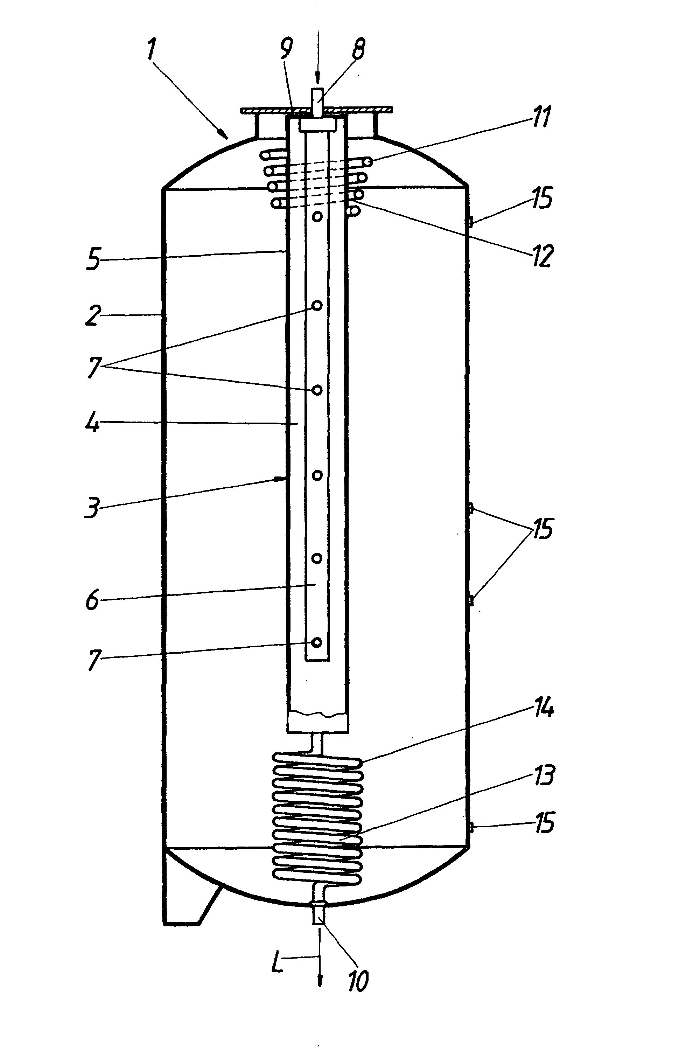

In der Zeichnung ist der Erfindungsgegenstand rein schematisch an Hand eines Axialschnittes durch einen erfindungsgemäßen Wärmespeicher näher veranschaulicht.

Ein Wärmespeicher 1, beispielsweise zur Warmwasserbereitung, weist einen stehenden Speicherbehälter 2 zur temperaturgeschichteten Aufnahme einer Speicherflüssigkeit, vorzugsweise Wasser, und einen sich der Höhe nach durch den Speicherbehälter 2 erstreckenden, in einen nicht weiter dargestellten Ladekreislauf L, insbesondere einen solarenergiegespeisten Ladekreislauf eingebundenen Ladeeinsatz 3 auf. Der Ladeeinsatz 3 umfaßt einen Ladewärmetauscher 4 mit einem vertikalen Wärmetauscherrohr 5 und ein von oben in das Wärmetauscherrohr 5 hineinragendes Schichtrohr 6 aus schlecht wärmeleitendem Material, wobei das Schichtrohr 6 voneinander höhenbeabstandete Ausströmöffnungen 7 bildet und im Deckenbereich des Speicherbehälters 2 einen Einlaßstutzen 8 für den Vorlaufanschluß des Ladekreislaufes L aufweist. Der Ladewärmetauscher 4 ist im Deckenbereich über eine Stirnwand 9 des Wärmetauscherrohres 5 abgeschlossen und im Bodenbereich des Speicherbehälters 2 mit einem Auslaßstutzen 10 für den Rücklaufanschluß des Ladekreislaufes L versehen. An das Wärmetauscherrohr 5 des Ladewärmetauschers 4 ist im oberen Speicherbehälterbereich eine Rohrschlange 11 mit einer Zusatzwärmetauscherfläche 12 angeschlossen und auch im unteren Speicherbehälterbereich ist der Ladewärmetauscher 4 mit einer Zusatzwärmetauscherfläche 13 ausgestattet, die beispielsweise durch einen dem Wärmetauscherrohr 5 nachgeschalteten Rohrschlangenwärmetauscher 14 gebildet wird.

Da der Ladewärmetauscher 4 über den durch das innere Schichtrohr 6 zuströmenden Wärmeträger des Ladekreislaufes L wärmebeaufschlagt wird und sich innerhalb des Schichtrohres und des Wärmetauscherrohres auf Grund der entsprechenden Dimensionierung der Rohre und der darauf abgestimmten Umlaufmenge des Ladekreislaufwärmeträgers eine Temperaturschichtung dieses Wärmeträgers einstellt, wird die Speicherflüssigkeit des Speicherbehälters 2 in Abhängigkeit von der Wärmeenergie des Wärmeträgers temperaturgeschichtet über den Ladewärmetauscher 4 aufgeladen. Es ist keine Rückkühlung wärmerer Temperaturschichten im Speicherbehälter durch niedriger temperierte Wärmeträgerströmungen zu befürchten und es kommt auch nicht zu unerwünschten Zirkulationsströmungen innerhalb des Speicherbehälters auf Grund einer zu starken Wärmeübertragung zwischen höher temperierten Wärmeträgerschichten und zu niederen Temperaturschichten im Speicherbehälter. Die Zusatzwärmetauscherflächen 12 im oberen Speicherbehälterbereich erlaubt dabei eine Schnelladung des oberen Bereiches der Speicherflüssigkeit und die untere Zusatzwärmetauscherfläche 13 ermöglicht noch eine spürbare Aufladung der unteren Bereiche bei schon großteils durchgeladenem Speicher.

Der erfindungsgemäße Ladeeinsatz 3 gewährleistet in Abhängigkeit vom jeweiligen Wärmeangebot des Ladekreislaufes L eine Aufladung der Speicherflüssigkeit im Speicherbehälter 2 von oben nach unten mit verhältnismäßig hohem Wirkungsgrad, wobei die in der Speicherflüssigkeit gespeicherte Wärme über geeignete, nur durch Anschlußstutzen 15 angedeutete interne und/oder externe Wärmetauscher bedarfsweise an Wärmeverbraucher, wie Brauchwasser oder ein Heizmedium u. dgl., übertragen wird.

## Patentansprüche

1. Wärmespeicher (1) mit einem Speicherbehälter (2) zur temperaturgeschichteten Aufnahme einer Speicherflüssigkeit und einem sich der Höhe nach durch den Speicherbehälter (2) erstreckenden, in einen Ladekreislauf (L) eingebundenen Ladeeinsatz (3), der einen Ladewärmetauscher (4) und ein voneinander höhenbeabstandete Ausströmöffnungen (7) aufweisendes Schichtrohr (6) aus schlecht wärmeleitendem Material umfaßt, **dadurch gekennzeichnet, daß** der Ladewärmetauscher (4) aus einem vertikalen Wärmetauscherrohr (5) besteht, daß das Schichtrohr (6) im Deckenbereich des Speicherbehälters (2) einen Einlaßstutzen (8) für den Vorlaufanschluß des Ladekreislaufes (L) aufweist und abwärts in das Wärmetauscherrohr (5) hineinragt, wobei der im Deckenbereich abgeschlossene Ladewärmetauscher (4) im Bodenbereich des Speicherbehälters (2) mit einem Auslaßstutzen (10) für den Rücklaufanschluß des Ladekreislaufes (L) versehen ist.

2. Wärmespeicher nach Anspruch 1, **dadurch gekennzeichnet, daß** der Ladewärmetauscher (4) im oberen Speicherbehälterbereich mit einer Zusatzwärmetauscherfläche (12) ausgestattet ist, wobei vorzugsweise eine Rohrschlange (11) die Zusatzwärmetauscherfläche (12) bildet.

3. Wärmespeicher nach Anspruch 1 oder 2, **dadurch gekennzeichnet, daß** der Laderwärmetauscher (4) im unteren Speicherbehälterbereich mit einer Zusatzwärmetauscherfläche (13) ausgestattet ist.

## Claims

1. A heat accumulator (1) comprising an accumulator tank (2) for the temperature-stratified reception of an accumulator liquid, and comprising a charging insert (3) which extends vertically through the accumulator tank (2) and is incorporated in a charging circuit (L), said charging insert (3) comprising a charging heat exchanger (4) and a stratification tube (6) of material which is a poor thermal conductor, said tube (6) having outflow openings (7) spaced apart over the height thereof, **characterised in that** the charging heat exchanger (4) consists of a vertical heat exchanger tube (5), **in that** the stratification tube (6) has, in the top zone of the accumulator tank (2), an inlet connection (8) for connecting the flow of the charging circuit (L) and projects downwards into the heat exchanger tube (5), while the charging heat exchanger (4), which is sealed off in the top zone, is provided, in the bottom zone of the accumulator tank (2), with an outlet connection (10) for the return flow connection of the charging circuit (L).

2. A heat accumulator according to claim 1, **characterised in that** the charging heat exchanger (4) is provided with an additional heat exchanger surface (12) in the upper accumulator tank zone, said additional heat exchanger surface (12) preferably being formed by a tube coil (11).

3. A heat accumulator according to claim 1 or 2, **characterised in that** the charging heat exchanger (4) is equipped with an additional heat exchanger surface (13) in the lower accumulator tank zone.

## Revendications

1. Accumulateur de chaleur (1), comportant un récipient accumulateur (2) pour recevoir, avec une stratification des températures, un liquide accumulateur et un insert de chargement (3), s'étendant dans la hauteur à travers le récipient d'accumulateur (2), intégré dans un circuit de chargement (L) et comprenant un échangeur de chaleur de chargement (4) et un tube de stratification (6) en matériau mauvais conducteur de la chaleur, présentant des ouvertures de sortie d'écoulement (7) espacées les unes des autres en hauteur, **caractérisé en ce que** l'échangeur de chaleur de chargement (4) est formé d'un tube d'échangeur de chaleur (5) vertical, **en ce que** le tube de stratification (6) présente, dans la zone de plafond du récipient d'accumulateur (2), une tubulure d'admission (8) pour le raccordement du circuit de chargement (L) à l'admission et pénètre en descendant dans le tube d'échangeur de chaleur (5), l'échangeur de chaleur de chargement (4), fermé dans la zone de plafond, étant muni, dans la zone de fond du récipient d'accumulateur (2), d'une tubulure d'évacuation (10) pour le raccordement de retour du circuit de chargement (L).

2. Accumulateur de chaleur selon la revendication 1, **caractérisé en ce que** l'échangeur de chaleur de chargement (4) est muni, dans la zone supérieure du récipient d'accumulateur, d'une surface additionnelle d'échangeur de chaleur (12), où, de préférence, un serpentin tubulaire (11) forme la surface additionnelle d'échangeur de chaleur (12).

3. Échangeur de chaleur selon la revendication 1 ou 2, **caractérisé en ce que** l'échangeur de chaleur de chargement (4) est muni, dans la zone inférieure du récipient d'accumulateur, d'une surface additionnelle d'échangeur de chaleur (13).
